# EUROPEAN PATENT APPLICATION

(11) **EP 4 290 315 A1**
(43) Date of publication of application: **13.12.2023**
(21) Application number: 21924762.4
(22) Date of filing: 19.10.2021
(51) Int. Cl.: G04F 5/02, G10H 1/00, G10H 1/40

(54) **COMMUNICATION METHOD, COMMUNICATION SYSTEM, AND COMMUNICATION DEVICE**

(30) Priority: 02.02.2021 JP 2021015060
(71) Applicant: YAMAHA CORPORATION, Hamamatsu-shi, Shizuoka 430-8650 (JP)
(72) Inventor: HARA, Takahiro, Hamamatsu-shi, Shizuoka 430-8650 (JP)
(74) Representative: Kehl, Ascherl, Liebhoff & Ettmayr Patentanwälte Partnerschaft mbB
(86) International application number: PCT/JP2021/038573
(87) International publication number: WO 2022/168375

(57) **Abstract**

A communication method according to an embodiment includes acquiring timing information which is repeatedly generated at a predetermined interval and is used for a notification process executed by a notification device and transmitting, as packet data, notification data and sequentially acquired sound data. The packet data includes the notification data based on a presence or an absence of the timing information during a period in which the sound data, contained in the packet data, was acquired.

## Description

### TECHNICAL FIELD

The present disclosure relates to a technique for controlling notification process at a remote location.

### BACKGROUND ART

In a case where multiple users who are remote from each other play a musical instrument, it is important to match the performance timing. For example, Patent Literature 1 discloses a technique for synchronizing a plurality of metronomes located at remote locations from each other.

### CITATION LIST

### PATENT LITERATURE

Patent Literature 1: Japanese laid-open patent publication No. 2001 - 154672

### SUMMARY OF INVENTION

### TECHNICAL PROBLEM

One of the objects of the present disclosure is to acquire sound data, sequentially acquired at a first communication base, at a second communication base, and also to recognize a timing, at which the sound data is acquired at the first communication base, at the second communication base.

### SOLUTION TO PROBLEM

According to an embodiment, there is provided a communication method including acquiring timing information, the timing information being is repeatedly generated at a predetermined interval, and the timing information being used for a notification process executed by a notification device, and transmitting, as packet data, notification data and sequentially acquired sound data. The packet data includes the notification data based on a presence or an absence of the timing information during a period in which the sound data, contained in the packet data, was acquired.

According to an embodiment, there is provided a communication method including receiving packet data containing sound data and notification data based on a presence or an absence of timing information repeatedly generated at a predetermined interval, reproducing the sound data contained in the packet data, and controlling, during a period in which the sound data is reproduced, a notification process, executed by a notification device, based on the notification data contained in the packet data together with the sound data.

According to an embodiment, a program for causing a computer to execute the above-described communication methods may be provided, or a communication device for executing the above-described communication methods may be provided. A communication system that executes both communication methods may be provided.

### ADVANTAGEOUS EFFECTS OF INVENTION

According to the present disclosure, it is possible to acquire sound data, sequentially acquired at a first communication base, at a second communication base, and also to recognize a timing, at which the sound data is acquired at the first communication base, at the second communication base.

### BRIEF DESCRIPTION OF DRAWINGS

FIG. 1 is a diagram illustrating a configuration of a communication system according to an embodiment.
FIG. 2 is a diagram illustrating a data communication function according to an embodiment.
FIG. 3 is a diagram illustrating a structure of packet data according to an embodiment.
FIG. 4 is a flowchart illustrating a data transmission method according to an embodiment.
FIG. 5 is a flowchart illustrating a data reception method according to an embodiment.
FIG. 6 is a flowchart illustrating an interpolation process according to an embodiment.
FIG. 7 is a diagram illustrating a structure of packet data according to a modification.

### DESCRIPTION OF EMBODIMENTS

Hereinafter, a communication system according to an embodiment of the present disclosure will be described in detail with reference to the drawings. The following embodiment is an example of embodiments of the present disclosure, and the present disclosure is not to be construed as being limited to these embodiments. In the drawings referred to in the present exemplary embodiment, the same portions or portions having similar functions are denoted by the same reference sign or similar reference sign (signs each formed simply by adding A, B, and the like to the end of a number), and a repetitive description thereof may be omitted.

### [1. Communication System Configuration]

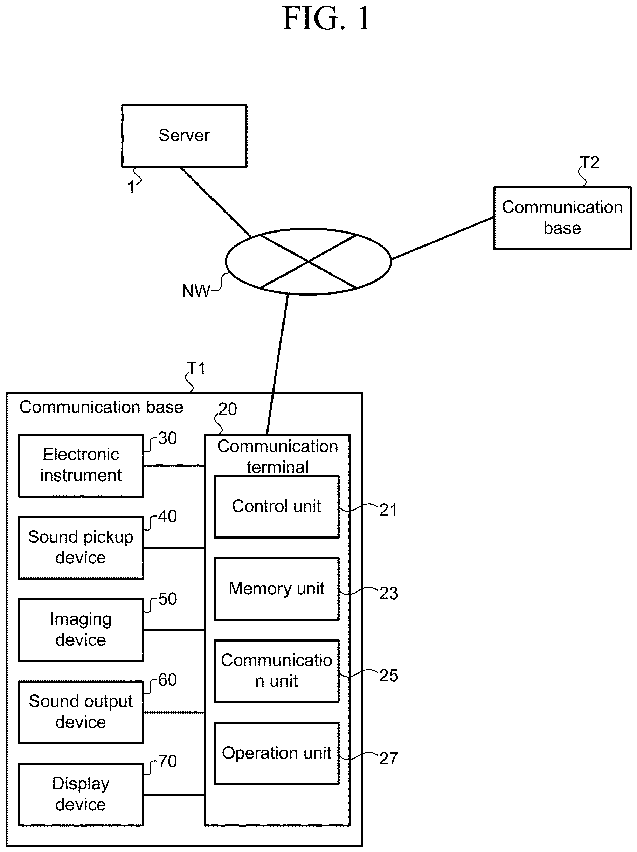

FIG. 1 is a diagram illustrating a configuration of a communication system according to an embodiment. The communication system includes a server 1 connected to a network NW such as the Internet. The server 1 include a control unit such as a CPU, a memory unit, and a communication unit. The control unit of the server 1 executes a predetermined program to provide a service for achieving an ensemble between communication bases. The server 1 controls communication between a plurality of communication bases connected to the network NW, and execute processes required for a communication terminal 20 (communication device) at each communication base to realize P2P type communication. The processes may be realized by a known method. Although two communication bases T1 and T2 are exemplified in FIG. 1, the number is not limited to this number, and a larger number of communication bases may be present. In the following description, in the case where the communication bases T1 and T2 are described without being distinguished, they are simply referred to as the communication base.

In this example, a sound corresponding to a performance (hereinafter referred to as a performance sound) between the communication bases is transmitted and received by the P2P communication, so that an ensemble can be performed. According to a data communication function described below, setting the metronome sound at the main communication base makes it possible to receive the sound while maintaining the relationship between the performance sound and the metronome sound at the main communication base at other communication bases. The main one communication base and the other communication bases are set via the server 1 based on information (user instruction or the like) transmitted from the communication base. In the following explanation, it is assumed that the communication base T1 is set as the main communication base.

The communication terminal 20 is arranged at each communication base. An electronic instrument 30, a sound pickup device 40, an imaging device 50, a sound output device 60, and a display device 70 are connected to the communication terminal 20. Although the communication terminal 20 is always present at each communication base, at least one of the electronic instrument 30, the sound pickup device 40, the imaging device 50, the sound output device 60, and the display device 70 may not be connected to the communication terminal 20. At least one of the electronic instrument 30, the sound pickup device 40, the imaging device 50, the sound output device 60, and the display device 70 and the communication terminal 20 may be configured as an integrated device.

The electronic instrument 30 includes a performance operator and a sound source for outputting the sound data according to the operation on the performance operator. In the example, the electronic instrument 30 is an electronic piano having a key as a performance operation. The sound data is output to the communication terminal 20. The sound data is data indicating a sound wave form signal, and may be output to the sound output device 60.

For example, the sound pickup device 40 has a microphone or an input terminal of the sound wave form signal, and outputs the sound input to the microphone or the sound wave form signal input to the input terminal as the sound data to the communication terminal 20.

For example, the imaging device 50 includes a camera and outputs moving image data corresponding to an image captured by the camera to the communication terminal 20. In the following description, the image includes both a still image and a moving image.

For example, the sound output device 60 includes a speaker and outputs a sound indicated by the sound data supplied from the communication terminal 20 from the speaker. The sound data supplied to the sound output device 60 may be sound data transmitted from another communication base or may be sound data generated at its own communication base.

For example, the display device 70 includes a liquid crystal display and displays an image indicated by the moving image data supplied from the communication terminal 20 on the liquid crystal display. The moving image data supplied to the display device 70 may be moving image data transmitted from another communication base or may be moving image data generated at its own communication base. The display device 70 may be a light-emitting unit including a light-emitting element, such as an LED.

### [2. Communication Terminal Configuration]

The communication terminal 20 includes a control unit 21, a memory unit 23, a communication unit 25, and an operation unit 27. The control unit 21 includes CPU, RAM, ROM, and the like. The control unit 21 executes a program stored in the memory unit 23 by the CPU to perform a process according to an instruction defined in the program. The program includes a program for performing a process of realizing the data communication function. The data communication function includes a function for realizing a data transmission method and a data reception method which will be described later.

The memory unit 23 includes a memory device such as a non-volatile memory, and stores the program executed by the control unit 21. In addition, various data used in the communication terminal 20 are stored. This program may be executed by a computer, and may be provided to the communication terminal 20 while being stored in a computer-readable recording medium such as a magnetic recording medium, an optical recording medium, a magneto-optical recording medium, or a semiconductor memory. In this case, the communication terminal 20 may be provided with a device for reading the recording medium. This program may be provided by downloading via the communication unit 25.

The communication unit 25 includes a communication module, and is connected to the network NW to transmit and receive various data to and from an external device such as the server 1 and the communication terminal 20 at another communication base. The data transmitted between the communication terminals 20 at each communication base is transmitted as streaming data.

The operation unit 27 includes an operation device such as a mouse, keyboard, accepts a user's operation on the operation device (hereinafter, may be simply referred to as a user instruction), and outputs a signal corresponding to the operation to the control unit 21.

### [3. Data Communication Function]

Next, the data communication function will be described.

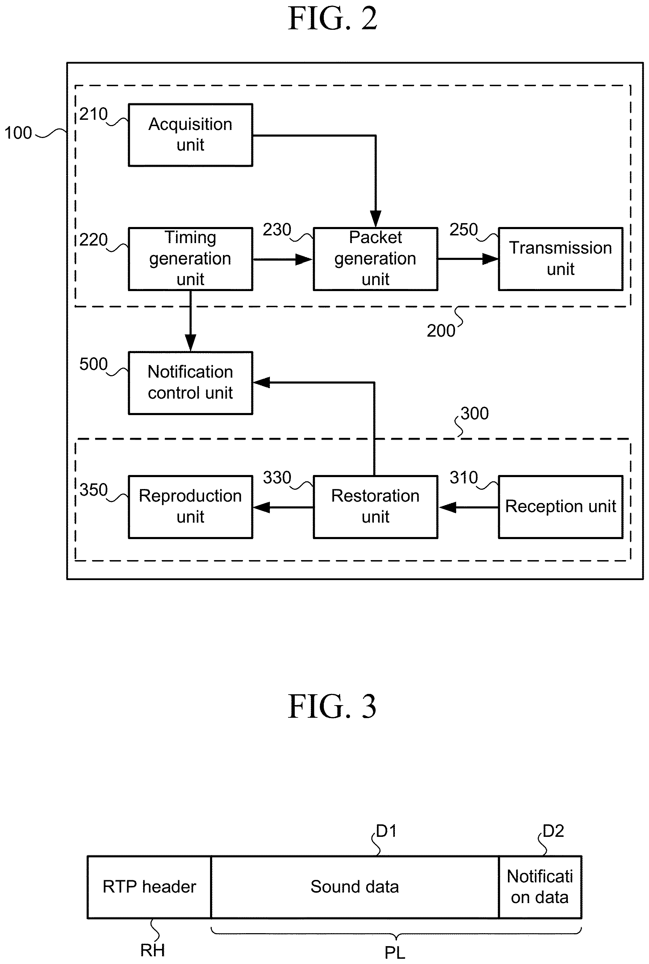

FIG. 2 is a diagram illustrating the data communication function according to an embodiment. A data communication function 100 includes a data transmission unit 200, a data reception unit 300, and a notification control unit 500. The data transmission unit 200 executes the data transmission method which will be described later. The data reception unit 300 executes the data reception method which will be described later.

The data transmission unit 200 includes an acquisition unit 210, a timing generation unit 220, a packet generation unit 230, and a transmission unit 250.

For example, the acquisition unit 210 sequentially acquires the sound data from a device connected to the communication terminal 20. In this example, the acquisition unit 210 sequentially acquires sound data corresponding to a sound generated by performance using the electronic instrument 30 (hereinafter referred to as "a performance sound"). The acquisition unit 210 buffers a predetermined volume of sound data and supplies the buffered sound data to the packet generation unit 230.

The timing generation unit 220 generates timing information based on the user instruction and supplies the timing information to the packet generation unit 230 and the notification control unit 500. The timing information is repeatedly generated at a predetermined interval. The interval and the generation start timing are set by the user instruction, and in this case, the interval and the generation start timing correspond to the tempo for sounding the metronome sound and the start timing of the metronome sound. For example, in the case where the tempo is set to "120", the timing generation unit 220 generates the timing information every 0.5 seconds from the start timing.

The process in the timing generation unit 220 is executed in the communication terminal 20 at the communication base T1 (main communication base) which is the source of the metronome sound, but is not executed in the communication terminal 20 at the communication base T2 which is not the source of the metronome sound.

The packet generation unit 230 packetizes the sound data acquired by the acquisition unit 210 to generate packet data. When packetizing the sound data, the packet generation unit 230 obtains the timing information generated by the timing generation unit 220, and further packetizes the notification data using the obtained timing information to generate the packet data. In this example, in the packet data, a communication protocol is RTP (Real-time Transport Protocol). The structure of the packet data will be described.

FIG. 3 is a diagram illustrating a structure of the packet data according to an embodiment. As shown in FIG. 3, a payload PL following an RTP header RH includes sound data D1 arranged in a first data position and notification data D2 arranged in a second data position. The first data position is determined in advance according to the number of samples (for example, 64 samples) of the sound data.

The notification data D2 includes data corresponding to the timing information. In this example, the notification data D2 indicates whether the timing information is generated by the packet generation unit 230 during a period in which the sound data D1 contained in the first data position is acquired by the acquisition unit 210. In other words, the notification data D2 includes data indicating the presence or absence of the timing information during the period in which the sound data D1 contained in the first data position is acquired. In this example, the notification data D2 is "1" in the case where the timing information is present (the case where the timing information is generated), and is "0" in the case where the timing information does not present (the case where the timing information is not generated). Therefore, in the packet data containing the performance sound when the metronome sound is sounded, the notification data D2 is "1".

As described above, the sound data acquired in the acquisition unit 210 is buffered before being supplied to the packet generation unit 230. Therefore, when the packet generation unit 230 packetizes the sound data supplied from the acquisition unit 210 after a time according to the buffer volume of the sound data from the timing at which the timing information is generated, the notification data is set to "1". Adjustment of the time according to the buffer amount may not be executed.

As described above, the process in the timing generation unit 220 does not be executed in the communication terminal 20 at the communication base T2. Therefore, no timing information is generated, and the notification data included in the packet data transmitted from the communication terminal 20 is "0". The packet data generated in the communication terminal 20 at the communication base T2 may not include the notification data.

Returning to FIG. 2, the description will be continued. The transmission unit 250 transmits the packet data generated in the packet generation unit 230. The destination is the communication terminal 20 at another communication base.

When the timing generation unit 220 generates the timing information, the notification control unit 500 generates sound data indicating the metronome sound and supplies the sound data to the sound output device 60. As a result, the metronome sound is output from the sound output device 60. The output metronome sound is not included in the sound data output from the electronic instrument 30. As described above, the notification control unit 500 controls a process of generating a metronome sound (notification process) executed by the sound output device 60 (notification device).

Therefore, in a case where the metronome sound was sounding when the acquisition unit 210 acquired the sound data by the performance operation on the electronic instrument 30, the packet data containing the sound data includes control data indicating that the timing information has been generated.

The data reception unit 300 includes a reception unit 310, a restoration unit 330, and a reproduction unit 350.

The reception unit 310 receives the packet data transmitted from the communication terminal 20 at another communication base.

The restoration unit 330 restores the sound data and the notification data from the packet data received by the reception unit 310. The restoration unit 330 supplies the restored sound data to the reproduction unit 350, generates timing data based on the notification data, and supplies the timing data to the notification control unit 500. The restoration unit 330 supplies the timing information to the notification control unit 500 when the sound data contained in the packet data whose notification data is "1" is supplied to the reproduction unit 350.

As described above, since the process of the timing generation unit 220 is not executed, the communication terminal 20 at the communication base T2 does not transmit the packet data whose notification data is "1". Therefore, in the communication terminal 20 at the communication base T1, the notification data restored by the restoration unit 330 is not "1". That is, in the communication terminal 20 at the communication base T1, the timing information to the notification control unit 500 is supplied from the timing generation unit 220, but is not supplied from the restoration unit 330. On the other hand, in the communication terminal 20 at the communication base T2, the timing information to the notification control unit 500 is supplied from the restoration unit 330, but is not supplied from the timing generation unit 220.

The reproduction unit 350 buffers and reproduces the sound data restored by the restoration unit 330. The reproduced sound data is supplied to the sound output device 60. The sound output device 60 outputs a sound corresponding to the supplied sound data (hereinafter referred to as "restored sound"). As described above, the sound output device 60 is also supplied with sound data indicating the metronome sound from the notification control unit 500. Therefore, the sound output device 60 outputs the restored sound and the metronome sound. Transmitting the packet data by the above-described method makes the temporal relationship between the restored sound and the metronome sound the same as the temporal relationship between the performance sound and the metronome sound described above.

### [4. Data Transmission Method]

Next, the data transmission method executed by the data transmission unit 200 (the control unit 21) of the data communication function 100 will be described. For example, each process of the data transmission method described below is started by the user instruction input to the operation unit 27. In this case, the main communication base (the communication base T1) which is the source of the metronome sound and other communication bases (the communication base T2) are set in advance. At the communication base T1, a metronome sound corresponding to the timing information is generated according to the user instruction.

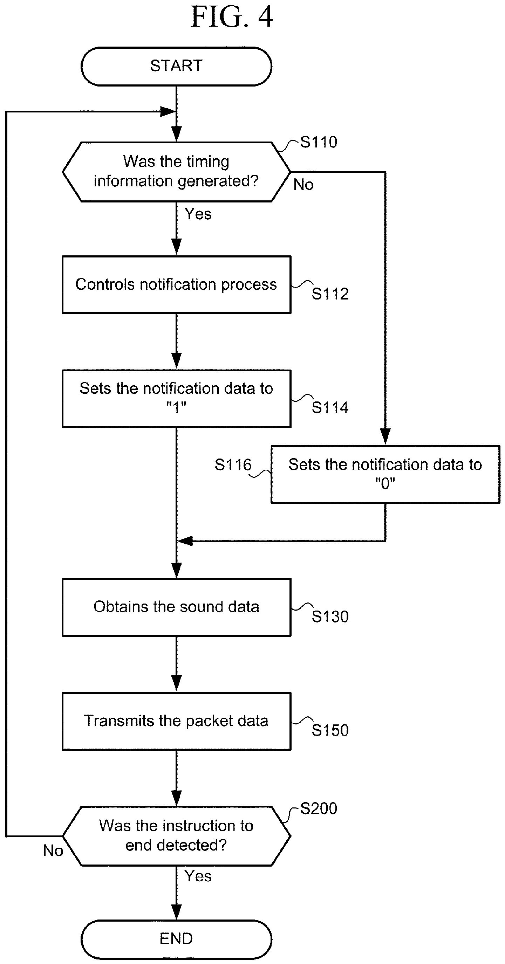

FIG. 4 is a flowchart illustrating the data transmission method according to an embodiment. In the case where the timing information is generated (step S110; Yes), the control unit 21 controls the notification process based on the timing information (step S112) and sets the notification data to "1" (step S114). This control generates a metronome sound according to the timing information, and the metronome sound is output from the sound output device 60. In the case where the timing information is not generated (step S110; No), the control unit 21 sets the notification data to "0" (step S116).

The control unit 21 acquires the sound data output from the electronic instrument 30 when the timing information is generated and the metronome sound is generated (step S130). The control unit 21 generates packet data by packetizing the acquired sound data and the notification data in association with each other, and transmits the packet data to another communication base T2 (step S150). As a result, the notification data includes information based on the presence or absence of generation of the timing information in the period in which the sound data is acquired. That is, in the case where the timing information is generated in the period in which the sound data to be packetized is acquired, the notification data corresponding to the sound data is set to "1", and in the case where the timing information is not generated in the period, the notification data corresponding to the sound data is set to "0".

In the case where the control unit 21 detects that an instruction to end the process has been input from the user (step S200; Yes), the control unit 21 ends the process of the data transmission method, and in the case where the instruction has not been detected (step S200; No), the control unit 21 returns to step S110 and continues the processes. The above is the description of the data transmission method.

### [5. Data Reception Method]

Next, the data transmission method executed by the data reception unit 300 (the control unit 21) of the data communication function 100 will be described. For example, each process of the data transmission method described below is started by the user instruction input to the operation unit 27.

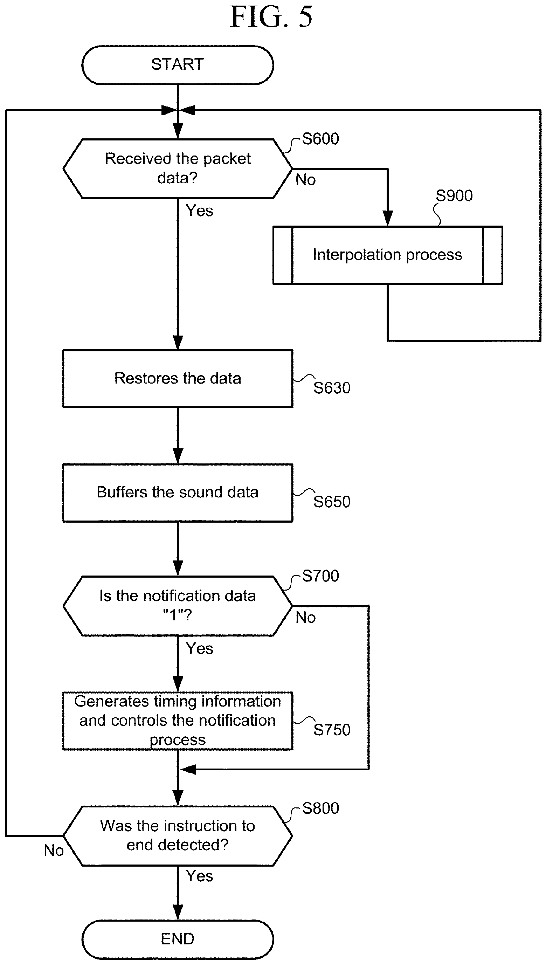

FIG. 5 is a flowchart illustrating the data reception method according to an embodiment. While not receiving the packet data (step S600; No), the control unit 21 waits for reception of the packet data while executing an interpolation process (step S900). The interpolation process will be described later. Upon receiving the packet data (step S600; Yes), the control unit 21 restores the sound data and the notification data from the packet data (step S630), and buffers the restored sound data (step S650). The buffered and reproduced sound data is supplied to the sound output device 60 and output from the sound output device 60 as a sound.

In the case where the restored notification data is "1" (step S700; Yes), the control unit 21 generates the timing information and controls the notification process (step S750). This control generates a metronome sound according to the timing information, and the metronome sound is output from the sound output device 60. The control unit 21 controls the timing at which the metronome sound is output from the sound output device 60 to be delayed according to the buffer time of the sound data. As a result, the metronome sound is output when the restored sound is output from the sound output device 60 based on the sound data corresponding to the notification data of "1".

In the case where the restored notification data is "0" (step S700; No), the control unit 21 does not generate the timing information. In the case where an instruction to end the process has been input from the user is detected (step S800; Yes), the control unit 21 ends the process of the data transmission method, and in the case where the instruction has not been detected (step S800; No), the control unit 21 returns to step S600 and continues the process. Next, the interpolation process (step S900) executed in the case where the packet data is not received in step S600 (step S600; No) will be described.

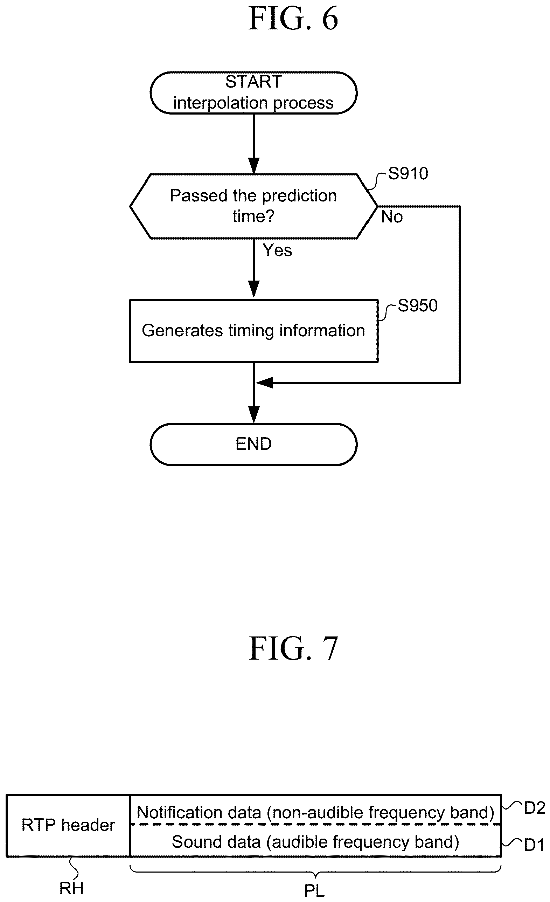

FIG. 6 is a flowchart illustrating the interpolation process according to an embodiment. In the case where the present time has not passed the prediction period (step S910; No), the control unit 21 ends the interpolation process, returns to the step S600, and continues the process. The prediction period is a period in which the timing information is predicted to be generated, and is determined based on a control history of the past notification process. For example, the control history is a timing at which the timing information is generated in a plurality of times in the past. For example, the control unit 21 predicts the timing at which the timing information is generated next from the averaged times of each interval (three periods) between the generation timings of the four times of the timing information. The prediction period is set as a period in which a predetermined time width is added around the prediction timing.

In the case where the present time has passed the prediction period (step S910; Yes), the control unit 21 generates the timing information (step S950), and ends the interpolation process. As a result, even if the communication terminal 20 at the communication base T2 does not receive the packet data whose notification data is "1" due to packet loss or the like, the metronome sound can be output from the sound output device 60. Although the sound data corresponding to the metronome sound cannot be restored due to packet loss, the restored sound is hardly interrupted in the case where the sound data before and after the sound data is present. In such a case, since the metronome sound is generated without being lost, it is also possible to prevent the user from feeling uncomfortable. The above is the description of the data transmission method.

According to the related art, the performance sounds sequentially acquired at a certain base (for example, a first communication base) are transmitted to another communication base (for example, a second communication base) as the sound data in a streaming format via a network. Therefore, due to the influence of the delay of the network, the timing at which the performance sound is transmitted and then sounded at the second communication base is delayed from the timing at which the performance sound is generated at the first communication base. In the case where the metronome sounds at all the bases at the same time, a deviation occurs between the relationship between the performance sound and the metronome sound at the first communication base and the relationship between the performance sound and the metronome sound at the second communication base. This gives a sense of discomfort to the user at the second base when the user tries to play along with the performance sound at the first communication base. Therefore, in an ensemble in which musical instruments are played simultaneously at different bases, it is not always desirable to make the metronome sound simultaneously at all the communication bases.

On the other hand, it is conceivable that the sound data transmitted from the first communication base includes not only the performance sound but also the metronome sound. In this case, the sound data is generated by mixing the performance sound and the metronome sound at the first communication base, and is transmitted to the second communication base. Therefore, at the second communication base that has received the sound data, both of the sounds can be sounded while maintaining the relative relationship between the performance sound and the sound of the metronome that was sounding at the time of the performance. However, this sound data results in data in a state in which both sounds cannot be separated from each other, and there arises a disadvantage in that only a performance sound at the first communication base cannot be recorded at the second communication base.

As described above, according to the data communication function of the embodiment, while maintaining the relationship between the performance sound and the metronome sound at the communication base T1, the restored sound corresponding to the performance sound and the metronome sound can be output from the sound output device 60 at another communication base (communication base T2). Therefore, the sound data sequentially acquired at the first communication base T1 is acquired at the second communication base T2, and the timing at which the sound data is acquired at the first communication base can also be recognized at the second communication base.

### [Modifications]

Although an embodiment of the present disclosure has been described above, an embodiment of the present disclosure can be modified into various forms as follows. The embodiment described above and the modifications described below can be applied in combination with each other.

(1) In the above-described embodiment, although the packet data is generated so that the sound data D1 and the notification data D2 are at different data positions, it may be generated in a different method.
   FIG. 7 is a diagram illustrating a structure of packet data according to a modification. For example, packet data containing the sound data D2 and the notification data D1 may be generated by converting the notification data D2 into a sound wave form in a non-audible frequency band and the superimposing the converted notification data D2 on the performance sound (sound data D1). In this case, the packet generation unit 230 may packetize the data obtained by superimposing the sound data D1 of the performance sound in an audible frequency band and the notification data D2 in the non-audible frequency band, and arrange the data in the payload PL. The restoration unit 330 may divide the transmitted data into the audible frequency band and the non-audible frequency band, thereby separating the transmitted data into the sound data D1 and the notification data D2. A known method can be used as a specific process method for realizing a technique of superimposing information on a non-audible frequency band, and for example, Japanese laid-open patent publication No. 2010-55077 discloses this method.
(2) The information notified to the user based on the timing information is not limited to the information recognized by auditory perception like a metronome sound, and may be information recognized by visual perception. The information that is visually recognized only needs to be notified to the user by the display device 70, and may be, for example, a predetermined light generated by the light-emitting element such as the LED or the like, or may be a predetermined video image reproduced on a display. Since the reproduction of the video requires more process time than the reproduction of the sound, the notification control unit 500 preferably outputs the moving image data (control data) for controlling the video image to be displayed to the display device 70 before the period during which the sound data is reproduced by the reproduction unit 350.
(3) The timing information may include beat information. The beat information is information indicating what beat the metronome sound to be sounded corresponds to. In this case, the beat is further set according to the user instruction. This information may not indicate all beats, and may be, for example, information specifying only the first beat.
   The notification control unit 500 may generate different metronome sounds for each beat based on the beat information. For example, the metronome sound may be generated with a sound different from the other beats only for the first beat. For example, the difference in the sound may be a difference in the volume of the sound or a difference in the timbre. In the case where the visually recognized information is used as in the modification (2) described above, the color may be different, or the brightness may be different depending on the beat. The notification data D2 contained in the packet data may represent information indicating the presence or absence of generation of the timing information by the beat information included in the generated timing information.
(4) The notification D2 may indicate the presence or absence of generation of the timing information by another information. For example, the generation of the timing information (presence of the timing information) may be represented by information indicating the data position of a particular sample among the samples included in the sound data D1 in the packet data. When the number of samples of the sound data D1 increases and the time of the performance sound included in the sound data D1 increases, depending on the interval of the metronome sound, the timing at which the metronome sound sounds in the period of the performance sound needs to be specified. In such the case, in order to specify the timing, it is preferable to include information that specifies the data position of the sample in the sound data D1 in the notification data D2. For example, the data position may be described as the number of samples counted from the first sample of the sound data D1.
   In the case where the period of the performance sound becomes longer and a plurality of metronome sounds is sounded, the notification data D2 may include information indicating the number of metronome sounds (the number of times the timing information is generated) sounded during the period of the performance sound in the sound data D1 and information specifying the data position for each metronome sound. For example, in the case where two metronome sounds are sounded during the period of the performance sound in the sound data D1, the notification data D2 includes information about the two metronome sounds, the first data position, and the second data position.
(5) The notification data D2 is not limited to being arranged in the payload PL of the packet data, and may be arranged in the header.
(6) In the data reception method described in FIG. 5 and FIG. 6, the interpolation process may not be executed.
(7) The timing information acquired by the packet generation unit 230 is not limited to being generated by the timing generation unit 220, and may be generated by an external device. For example, the timing information may be generated in the sound output device 60. In this case, the sound output device 60 outputs the generated timing information to the communication terminal 20. The sound output device 60 may generate a metronome sound based on the timing information.

The above is the description of the modification.

As described above, according to an embodiment, there is provided a communication method including acquiring timing information that is repeatedly generated at a predetermined interval and used for a notification process executed by a notification device, and transmitting notification data, the notification data being based on the presence or absence of the timing information during a period in which the sound data contained in the packet data was acquired. Further, the configuration may be as follows.

Transmitting the packet data includes generating the packet data by differentiating a position of the sound data and a position of the notification data in the packet data.

Transmitting the packet data includes superimposing the notification data on the sound data as data converted into a sound wave form in a frequency band different from that of the sound data.

The notification data includes information that specifies a data position of the sound data contained in the packet data at the time the timing information was acquired.

The notification data includes information indicating a number of times the timing information was generated during the period in which the sound data contained in the packet data was acquired.

The timing information defines beat information, and the notification data includes the beat information corresponding to the timing information in the period.

According to an embodiment, there is provided a communication method including receiving packet data containing sound data and notification data based on the presence or absence of timing information repeatedly generated at a predetermined interval, reproducing the sound data contained in the packet data, and controlling, during a period in which the sound data is reproduced, a notification process executed by a notification device based on the notification data included in the packet data together with the sound data. Further, the configuration may be as follows.

The notification process includes outputting a predetermined sound.

The notification process includes generating predetermined light.

The notification process includes reproducing a predetermined video image.

Controlling the notification process includes outputting control data for the notification process to the notification device prior to the period during which the sound data is reproduced.

In case no packet data is received during a period defined based on a control history of a past notification process, the notification device is controlled to execute a predetermined notification process after the period has elapsed.

### REFERENCE SIGNS LIST

1: server, 20: communication terminal, 21: control unit, 23: memory unit, 25: communication unit, 27: operation unit, 30: electronic instrument, 40: sound pickup device, 50: imaging device, 60: sound output device, 70: display device, 100: data communication function, 200: data transmission unit, 210: acquisition unit, 220: timing generation unit, 230: packet generation unit, 250: transmission unit, 300: data reception unit, 310: reception unit, 330: restoration unit, 350: reproduction unit, 500: notification control unit

## Claims

1. A communication method comprising:
acquiring timing information that is repeatedly generated at a predetermined interval and is used for a notification process executed by a notification device; and
transmitting, as packet data, notification data and sequentially acquired sound data the notification data being based on a presence or an absence of the timing information during a period in which the sound data, contained in the packet data, was acquired.

2. The communication method according to claim 1, wherein transmitting the packet data includes generating the packet data by differentiating a position of the sound data and a position of the notification data in the packet data.

3. The communication method according to claim 1, wherein transmitting the packet data includes superimposing the notification data on the sound data as data converted into a sound wave form in a frequency band different from that of the sound data.

4. The communication method according to any of claims 1 to 3, wherein the notification data includes information that identifies a data position of the sound data contained in the packet data at the time the timing information was acquired.

5. The communication method according to claim 4, wherein the notification data includes information indicating a number of times the timing information was generated during the period in which the sound data, contained in the packet data, was acquired.

6. The communication method according to any of claims 1 to 5, wherein:
the timing information defines beat information; and
the notification data includes the beat information corresponding to the timing information in the period.

7. A communication method comprising:
receiving packet data containing sound data and notification data based on a presence or an absence of timing information repeatedly generated at a predetermined interval,
reproducing the sound data contained in the packet data; and
controlling, during a period in which the sound data is reproduced, a notification process, executed by a notification device, based on the notification data included in the packet data together with the sound data.

8. The communication method according to claim 7, wherein the notification process includes outputting a predetermined sound.

9. The communication method according to claim 7 or 8, wherein the notification process includes generating a predetermined light.

10. The communication method according to any of claims 7 to 9, wherein the notification process includes reproducing a predetermined video image.

11. The communication method according to claim 10, wherein controlling the notification process includes outputting control data for the notification process to the notification device prior to the period during which the sounds data is reproduced.

12. The communication method according to any of claims 7 to 11, wherein, in a case where no packet data is received during a period defined based on a control history of a past notification process, the notification device is controlled to execute a predetermined notification process after the period has elapsed.

13. A communication system comprising:
a first communication device; and
a second communication device,
wherein:
the first communication device includes a data transmission unit that transmits notification data and sequentially acquired sound data as packet data,
the notification data is based on a presence or an absence of timing information during a period in which the sound data, contained in the packet data, was acquired,
the timing information is repeatedly generated at a predetermined interval and used for a notification process executed by a notification device, and
the second communication device includes a data receiving unit that receives the packet data and reproduces the sound data contained in the packet data and a second notification control unit that controls a notification process executed by the second notification device, based on the notification data contained in the packet data together with the sound data, during a period when the sound data is reproduced.

14. A communication device comprising:
a data transmission unit that transmits, as packet data, notification data and sequentially acquired sound data, the notification data being based on a presence or an absence of timing information during a period in which the sound data, contained in the packet data, was acquired,
wherein the timing information is repeatedly generated at a predetermined interval and is used for a notification process executed by a notification device.

15. A communication device comprising:
a data receiving unit that receives packet data containing sound data and notification data, the notification data being based on a presence or an absence of timing information repeatedly generated at a predetermined interval, and reproduces the sound data contained in the packet data; and
a notification control unit that controls a notification process, executed by a second notification device, based on the notification data, contained in the packet data together with the sound data, during a period when the sound data is reproduced.
